# EUROPÄISCHE PATENTANMELDUNG

(11) **EP 0 559 066 A1**
(43) Veröffentlichungstag der Anmeldung: **08.09.1993**
(21) Anmeldenummer: 93102858.3
(22) Anmeldetag: 24.02.1993
(51) Int. Cl.: F16K 49/00, F16L 59/16

(54) **Gehäuse für wärmeisolierte Armaturen und/oder Flanschverbindungen**

(30) Priorität: 25.02.1992 DE 4205720; 08.07.1992 DE 4222297
(71) Anmelder: Jacobs, Heinz - Josef, D-33100 Paderborn (DE)
(72) Erfinder: Jacobs, Ludwig, W-4790 Paderborn (DE)
(74) Vertreter: Eikel, Cordula

(57) **Zusammenfassung**

Das Gehäuse soll derart ausgestaltet sein, daß eine Bedienung der darin befindlichen Armatur ermöglicht wird, ohne daß die Gefahr von etwaigen Wärme- oder Kältebrücken besteht oder aber gar eine Öffnung des Gehäuses zur Bedienung des Schiebers und sei es auch nur für einen gewissen Zeitraum, erforderlich ist.

Um diese Aufgabe zu lösen, weist wenigstens eines der Gehäuseteile einen die Betätigungsvorrichtung aufnehmenden als Dom ausgestalteten Vorsprung (25) sowie einer Einrichtung zur Bedienung der Betätigungsvorrichtung auf und die für die Durchführung der Rohrleitungen vorgesehenen Öffnungen sind durch jeweils eine Isoliermuffe (20) gebildet.

## Beschreibung

Die Erfindung betrifft ein Gehäuse für wämeisolierte Armaturen und/oder Flanschverbindungen mit den Merkmalen des Oberbegriffes des Patentanspruches 1.

Bei bekannten derartigen Gehäusen war es bisher nicht möglich, diese vorgefertigt, d. h. in Serie herzustellen, da sowohl der Aufbau der Wandung als auch die notwendige Dichtigkeit z. B. im Rohrleitungsbereich bei standarisierten Gehäusen nicht erreicht werden konnte, sondern vielmehr jeweils entsprechend des Rohrdurchmessers der Leitung eine gesonderte Anpassung notwendig war. Die Gehäuse wurden daher als Einzelanfertigung erstellt.

Desweiteren bestand bei derartigen Gehäusen die Notwendigkeit, zumindest einen Teil der z . B. bei der Verwendung eines herkömmlichen Schiebers notwendigen Betätigungsvorrichtung außerhalb des Gehäuses anzuordnen, um so eine Betätigung des Schiebers zu ermöglichen.

Ein derariger konstruktiver Aufbau bringt es jedoch mit sich, daß stets entsprechende Wärme- bzw. Kältebrücken entstehen, so daß das Gehäuse nicht den gewünschten Anforderungen gerecht wird.

Desweiteren stellen derartige Übergänge, d. h. Stellen, an denen z. B. die Gewindespindel eines Handrades aus dem Dichtungsgehäuse herausragt und es bei Betätigung des Handrades zu einer Bewegung im Bereich des Dichtungselementes kommt, stets Gefahrenpunkte dar, die durch eine hohe Störanfälligkeit gekennzeichnet sind, d. h. nach einem gewissen Zeitraum nicht mehr die notwendige Dichtigkeit aufweisen und so die Wirkung des gesamten Gehäuses in Frage stellen.

Der Erfindung liegt daher die Aufgabe zugrunde, ein Gehäuse für wärmeisolierte Armaturen und/oder Flanschverbindungen zu schaffen, daß sich zum einen durch einen einfachen aber wirkungsvollen konstruktiven und damit wirtschaftlichen Aufbau auszeichnet und zum anderen eine Bedienungsmöglichkeit der vom Gehäuse umschlossenen Armatur und /oder Flanschverbindung schafft, die es ermöglicht, die z. B. Armatur zu bedienen, ohne daß die Gefahr von etwaigen Wärmebrücken besteht oder aber gar eine Öffnung des Gehäuses und sei es auch nur für einen gewissen Zeitraum, erforderlich macht.

Diese Aufgabe wird bei einem Gehäuse für wärmeisolierte Armaturen und/ oder Flanschverbindungen der eingangs genannten Gattung mit den Merkmalen des kennzeichnenden Teiles des Schutzanspruchs 1 gelöst. Weitere vorteilhafte Ausgestaltungen der Erfindung sind Gegenstand der Unteransprüche.

Dadurch, daß wenigstens eines der Gehäuseteile einen die Betätigungsvorrichtung aufnehmenden als Dom ausgestalteten Vorsprung aufweist, daß wenigstens eine Einrichtung zur Bedienung der Betätigungsvorrichtung vorgesehen ist und daß die für die Durchführung der Rohrleitungen vorgesehenen Öffnungen durch jeweils eine Isoliermuffe gebildet sind, wird zum einen sicher gestellt, daß die z. B. in dem Gehäuse befindliche Armatur bedient werden kann, ohne daß das Gehäuse geöffnet werden müßte und zum anderen die Möglichkeit geschaffen, die in das Gehäuse hinein und herausdführenden Rohrleitungen im Bereich der dazu vorgesehenen Durchtrittsöffnungen derart zu isolieren, daß auch hier die Gefahr etwaiger Wärmebrücken ausgeschaltet ist.

Ist die Einrichtung zur Bedienung der Betätigungsvorrichtung einen Teil des Domes bildend ausgestaltet, so ist dadurch sicher gestellt, daß die im Gehäuse befindliche Armatur bedient werden kann, ohne daß ein Teil der Armatur aus dem Gehäuse herausragen müßte, d. h. das Gehäuse keine nach außen hin in Erscheinung tretenden störanfälligen Dichtungselemente aufweisen muß, so daß auch bei langfristiger Benutzung des Gehäuses nicht die Gefahr einer erhöhten Störanfälligkeit besteht, sondern vielmehr ein Gehäuse bereit gestellt ist, daß sich durch eine hohe Störunanfälligkeit und damit hohe Wirtschaftlichkeit auszeichnet.

Dadurch, daß die Einrichtung zur Bedienung der Betätigungsvorrichtung eine wenigstens die Außenfläche des Domes wenigstens teilweise durchdringende Einrichtung zur Bedienung der Betätigungsvorrichtung ist, wird ebenfalls sicher gestellt, daß die in dem Gehäuse befindliche Armatur bedient werden kann, ohne daß das Gehäuse zuvor geöffnen werden müßte oder daß, um eine Bedienungsmöglichkeit zu schaffen, ein Teil der Armatur aus dem Gehäuse herausragen müßte.

Besteht der Dom aus einem, mit dem ihm zugeordneten Gehäuseteil eine Baueinheit bildenden Stutzen und einen diesen Stutzen an der dem Gehäuseteil abgewandten verschließenden Deckel, so wird dadurch zum einen die Möglichkeit geschaffen, die gesamte Betätigungsvorrichtung, einschließlich eines evtl. vorhandenen Handrades zu umschließen, ohne daß hier etwaige Kälte- bzw. Wärmebrücken entstehen und zum anderen ist eine Konstruktion gewählt, die sich durch eine einfache aber umso wirkungsvollere Bauweise auszeichnet und eine Fertigung des Stutzens nebst des zugehörigen Gehäusteiles aus einem Material ermöglicht, ohne daß hierzu komplizierte Dichtungseinrichtungen oder Arbeitsschritte notwendig sind, vielmehr kann eine derartige Baueinheit in Serie gefertigt werden.

Weisen die Wandung der Gehäuseteile sowie die Wandung des zugehörigen Domes eine Außen- und Innenwandung auf, so ist dadurch eine zweischichtige Gehäusewand geschaffen, die sich durch einfachsten Aufbau bei gleichzeitig höchsten Wirkungsgrad auszeichnet.

Ist der als Stutzen ausgebildete Teil des Domes einstückig mit der Außenwandung des zugeordneten Gehäuseteiles ausgestaltet, so besteht dadurch die Möglichkeit, den entsprechenden Gehäuseteil nebst Stutzen durch z. B. ein Tiefziehverfahren herzustellen, ohne das hier anfällige Nahtstellen entstehen, wobei gleichzeitig neben diesem dadurch zu erzielenden konstruktiven Vorteil noch eine preiswerte Erstellungsmöglichkeit geschaffen wird.

Ist die vom Kopfende des Deckels sich erstreckende Außenwandung der Umfangsfläche des Deckels, die ihr zugewandte Seite des Stutzen umgreifend angeordnet und ausgestaltet und endet das vom Kopfende des Deckels abgewandte Ende der Außenwandung in einem größerem Abstand zum Kopfende des Deckels, als das vom Kopfende des Deckels abgewandte Ende der, die Innenseite der Umfangsfläche bildenden Innenwandung, so wird dadurch erreicht, daß die Innenwandungen von Deckel und zugeordnetem Gehäuseteil in Grundstellung gegeneinander stoßen, während die Außenwandung des Deckels den Stutzen zumindest teilweise umgreift, so daß zum einen eine, eine Wirkungseinheit bildende Isolierschicht von Gehäuseteil und Deckel entsteht und zum anderen diese, eine Wirkungseinheit bildende Isolierschicht von der Außenwand des Gehäuseteiles und Deckels überlappend umgriffen wird, so daß ein Höchstmaß an Wärmeisolierung erreicht ist, ohne daß die Gefahr besteht, daß durch z. B. fehlerhafte Bedienung des erfindungsgemäßen Gehäuses es zu entsprechenden Wärme- bzw. Kältebrücken kommt.

Ist der Deckel mit seiner Innenwandung der Umfangsfläche in seiner Grundstellung, gegen die Innenwandung des Stutzens stoßend angeordnet und ist zwischen der Außenwandung des Stutzens und dem ihn umgreifenden Teil des Deckels wenigstens eine vorzugsweise zwei Abdichtungen, wie z. B. eine Lippendichtung umlaufend um den oberen Bereich des Stutzens angeordnet, so ist dadurch ein weiteres Dichtungselement bereit gestellt, daß z. B. bei Betätigung der Betätigungsvorrichtung, d. h. Lockerung des Wirkungsbereiches von Deckelisolierschicht und Gehäuseteilisolierschicht sicherstellt, daß auch bei Betätigung des Deckels, d. h. drehen des Deckels eine Abdichtung des Innenraumes des Gehäuses vorliegt.

Sind die aneinander stoßenden Innenwandungen von Deckel und Stutzen mittels eines lösbaren, mehrfach haftenden Klebers miteinander verbunden, so hat dies zur Folge, daß zum einen ein optimaler Sitz zwischen den aufeinander stoßenden Innenwandungen von Deckel und Stutzen gewährleistet ist und zum anderen sicher gestellt ist, daß in optimaler Weise die beiden aufeinander stoßenden Isolierschichten eine Wirkungseinheit bilden, so daß die beiden aufeinander stoßenden Isolierschichten in ihrer Wirkung mit einer einstückigen Isolierschicht zu vergleichen sind.

Durch die Anordnung dreier mit einem etwaig vorhandenen Handrad einer Betätigungsvorrichtung in Eingriff zu bringenden und/oder stehenden Stifte auf der Innenseite des Kopfendes des Deckels wird die Möglichkeit geschaffen, die z. B. Armatur mittels eines Handrades zu betätigen, ohne daß das Gehäuse dazu geöffnet werden oder das Handrad aus dem Gehäuseinneren hervorschauen müßte, sondern vielmehr eine Drehung des Deckels reicht, um die Armatur in gewünschter Art und Weise zu betätigen, ohne daß es dabei zu einem Nachlassen der Isolierungswirkung durch das erfindungsgemäße Gehäuse kommt und dies bei gleichzeitig einfachstem Aufbau des Gehäuses.

Sind die Stifte wenigstens teilweise aus einem nicht wärmeleitenden Material und/oder auf einer nicht wärmeleitenden Grundplatte angeordnet und ist die Grundplatte auf der Innenseite des Deckelbodens bzw. des Kopfendes des Deckels bildenden Isolierschicht festgelegt, so wird sicher gestellt, daß auch keine Wärmebrücken in nur kleinster Dimension entstehen können, sondern vielmehr selbst die geringste Möglichkeit einer Wärmebrücke von vorneherein ausgeschlossen wird.

Ist auf der Innenseite des Kopfendes des Deckels eine mit der Betätigungsvorrichtung unmittelbar ohne Zwischenschaltung eines Handrades in Wirkungseingriff zu bringende Vorrichtung vorgesehen, so besteht die Möglichkeit, mittels des Deckels die z. B. im Gehäuse befindliche Armatur zu bedienen, ohne daß hierzu ein Handrad notwendig ist, so daß auf die Anbringung eines Handrades gänzlich verzichtet werden kann, wobei die evtl. vorhandenen Stifte bei einer derartigen Bedienung der Armatur ohne Handrad nicht stören bzw. störend wirken, so daß eine derartige Vorrichtung zusätzlich zu den vorhandenen Stiften oder jedoch auch anstatt der vorhandenen Stifte angebracht werden kann und das erfidungsgemäße Gehäuse, unabhängig von der Ausgestaltung der Armatur eingesetzt werden kann.

Weist der Deckelboden bzw. das Kopfende des Deckels auf seiner Innenseite eine Nase auf, die mit einem komplementär dazu ausgestalteten Teil des Verbindungselementes in Eingriff zu bringen ist und ist daß diesem Teil gegeüberliegende Ende des Verbindungselementes komplementär und in Eingriff bringbar zu dem ihm zugewandten Ende der Gewindespindel der Betätigungsvorrichtung ausgebildet und ist daß der Nase zugewandte und der Gewindespindel zugewandte Ende mittels eines nicht wärmeleitenden Zwischenstückes miteinander verbunden, so wird dadurch ein Verbindungselement bereit gestellt, daß zum einen auf einfachste Art und Weise an den Betätigungsdeckel anzubringen ist und zum anderen sicherstellt, daß es nicht, hervorgerufen durch den direkten Kontakt zwischen Gewindespindel und Deckel zu entsprechenden Wärmeleitungen bzw. Kälteleitungen kommt, so daß auch in dieser Version eine absolute Isolierung der Armatur sichergestellt ist.

Ist die Einrichtung zur Bedienung der Betätigungsvorrichtung als ein als Kopfende des Domes im Dichteschluß mit diesen es durchdringendes Betätigungsorgan ausgestaltet, so wird dadurch sicher gestellt, daß zur Betätigung z. B. des im Gehäuse befindlichen Schiebers, das Gehäuse nicht zuvor geöffnet werden muß oder aber ein Teil des Schiebers aus dem Gehäuse hinausragt und so eine Wärme- bzw. Kältbrücke bildet, so daß auf diese Weise eine optimale Isolierung des Schiebers sichergestellt ist.

Weist das Betätigungsorgan an seiner dem Gehäuseinneren zugewandten Seite Betätigungsstifte auf, so ist dadurch eine einfache konstruktive aber umso wirkungsvollere und damit effizeinte Ausgestaltung des Betätigungsorganes geschaffen, mit deren Hilfe der Schieber bzw. das zum Schieber gehörende Handrad bedient werden kann, ohne daß zuvor arbeitsvorbereitende Maßnahmen notwendig sind.

Ist das Betätigungsorgan an seiner dem Gehäusinneren abgewandten Seite mit einer Haltekappe koppelbar ausgestaltet, so wird zum einen dadurch sicher gestellt, daß das Betätigungsorgan auf einfache aber wirkungsvolle Weise festgelegt werden kann und zum anderen, daß dadurch das Gehäuse gegen äußere Einflüsse wirksam abgeschottet ist, ohne daß auch bei extremsten Belastungen die isolierende Wirkung aufgehoben werden könnte.

Weist das Betätigungsorgan an seiner dem Gehäuseinneren abgewandten Seite eine als Innensechskant ausgestaltete Vertiefung auf, so ist dadurch die Bedienung des Schiebers mittels einfacher Werkzeuge sicher gestellt, ohne daß das Betätigungsorgan in einem nicht gewollten Maße aus dem Gehäuse herausragen müßte, um so eine Betätigung zu ermöglichen.

Weist das Betätigungsorgan eine mit der Betätigungsvorrichtung unmittelbar ohne Zwischenschaltung eines Handrades in Wirkungseingriff zu bringende Vorrichtung auf, so besteht die Möglichkeit, mittels des Betätigungsorganes die z. B. im Gehäuse befindliche Armatur zu bedienen, ohne das hierzu ein Handrad notwendig ist, so daß auf die Anbringung z. b. eines Handrades gänzlich verzichtet werden kann, wobei die evtl. vorhandenen Stifte bei einer derartigen Bedienung der Armatur ohne Handrad nicht stören bzw. störend wirken, so daß eine derartige Vorrichtung zusätzlich zu den vorhandenen Stiften oder jedoch auch anstatt der vorhandenen Stifte angebracht werden kann und das erfindungsgemäße Gehäuse, unabhängig von der Ausgestaltung der Armatur eingesetzt werden kann.

Weist das Betätigungsorgan aus seiner, dem inneren des Gehäuses zugewandten Seite des Gehäuses eine Nase auf, die mit einem komplementär dazu ausgestalteten Teil des Verbindungselementes in Eingriff zu bringen ist, ist das diesem Teil gegenüberliegende Ende des Verbindungselementes komplementär und in Eingriff bringbar zu dem ihm zugewandten Ende der Gewindespindel der Betätigungsvorrichtung ausgebildet und ist daß der Nase zugewandte und der Gewindespindel zugewandte Ende des Verbindungselementes mittels eines nicht wärmeleitenden Zwischenstückes miteinander verbunden, so wird dadurch ein Verbindungselement bereit gestellt, daß zum einen auf einfachste Art und Weise an dem Betätigungsgeckel anzubringen ist und zum anderen sicher stellt, daß es nicht, hervorgerufen durch einen direkten Kontakt zwischen Gewindespindel und Deckel, zu entsprechenden Wärmeleitungen bzw. Kälteleitungen kommt, so daß auch in dieser Version eine absolute Isolierung der Armatur sicher gestellt ist.

Dadurch, das jede der Isoliermuffen zweiteilig ausgestaltet ist und jeweils eines der beiden Isoliermuffenteile jeweils einem Gehäuseteil zugeordnet ist, wird die Möglichkeit geschaffen, die einzelnen Isoliermuffenteile bereits bei der Fertigung des Gehäuses an die einzelnen Gehäuseteile anzubringen und dadurch eine einfache aber umso sicherere Montage möglichkeit zu schaffen, da nicht vor Ort die jeweils die Isoliermuffe entsprechend anzupassen ist, sondern das erfindungsgemäße Gehäuse lediglich entsprechend zu plazieren und zu verschrauben ist und es dabei zu einer gewissen Quetschung der Isoliermuffe mit dem damit einhergehenden vorteilhaften besonderen Dichteschluß kommt.

Ist jedes der Isoliermuffenteile mit seiner der Rohrleitung abgewandten Seite fest mit der, einen Teil der Gehäusewandung bildenden Isolierschicht verbunden, so wird dadurch zum einen erreicht, daß die Isoliermuffe bzw. die Isoliermuffenteile fest, d. h. unverrückbar mit den entsprechenden Gehäuseteilen verbunden sind und zum anderen, daß es bei der Montage nicht zu Verschiebungen der Isoliermuffenteile kommen kann, so daß ein optimaler Sitz gewährleistet ist.

Ist zwischen der Isolierschicht der beiden Gehäuseteile auf der Gehäuseteilungsebene wenigstens teilweise ein lösbarer, mehrfach haftender Kleber angeordnet, so hat dies zur Folge, daß auf einfache aber wirkungsvolle Weise eine Dichte zwischen den Gehäuseteilen gewährleistet werden kann und zum anderen die Möglichkeit besteht, die Gehäuseteile ohne Beschädigung des Gehäuses bei Bedarf wieder voneineander zu trennen und die gleichen Gehäuseteile wieder verwenden zu können.

Ist wenigstens eine der gegeneinander weisenden Gehäuseteilwandungen der beiden Gehäuseteile mit wenigstens einem mit der gegenüberliegenden Gehäuseteilwandung des anderen Gehäuseteiles in Eingriff gelangendem Dichtungselement versehen und weisen die beiden gegeneinander gerichteten Gehäusewandungen jeweils ein mit dem gegegüberliegenden Dichtungselement in Eingriff gelangendes Dichtungselement auf, so ist dadurch eine Verbindung bzw. Abdichtung der beiden Gehäuseteile geschaffen, die sich durch einen hohen Dichteschluß sowohl bei hohen Temperaturdifferenzen als auch bei Feuchte und Nässe auszeichnet und dies bei gleichzeitig geringen Produktions- und Handhabungskosten und dadurch hoher Wirtschaftlichkeit.

Ist das Dichtungselement als ein, mit der abzudichtenden Fläche in Eingriff zu bringendes, eine konvexe Dichtungsfläche aufweisendes und wenigstens einen Teil der Wandung wenigstens teilweise umhüllendes Dichtungselement ausgestaltet, so ist dadurch zum einen sicher gestellt, daß eine Positionierung des Dichtungselementes auf einfache, aber umso wirkungsvollere Weise vorgenommen werden kein und das kann z. B. Spritzwasser oder eine sonstig geartete Feuchtigkeit in den Wandungsinnenbereich eindringen kann.

Die winkelförmige Ausgestaltung des wenigstens einen Teil der Wandung umhüllenden Teiles des Dichtungselementes erlaubt eine einfache Positionierung des Dichtungselementes und stellt gleichzeitig sicher, daß der jeweilige Außenwandbereich einen zusätzlichen Schutz durch das Dichtungselement erfährt und so etwaigen Beschädigungen wirksam begegnet wird.

Sind die Dichtungselemente mittels Zentrierstifte miteinander in einer vorbestimmten festgelegten Position festlegbar ausgestaltet, so wird sichergestellt, daß die sich gegenüberliegenden Dichtungselemente in der für eine Abdichtung optimalen Position arretiert werden und so Handhabungsfehler beim Zusammenbau der beiden Gehäuseteile nicht vorkommen können.

Sind die Isoliermuffen über die jeweilige Stirnseite des Gehäuses nach außen hinausragend und in einem Abstand zum entsprechenden zur jeweiligen Rohrleitung gehörenden Flansch im Gehäuseinneren endend ausgestaltet und von zwei halbschalenförmig ausgestalteten Mänteln auf ihrer der Rohrleitung abgewandten Seite umgeben und sind diese in direktem Kontakt mit dem Dichtungselement stehend angeordnet, so ist dadurch sichegestellt, daß auch im Bereich der Durchtrittsöffnungen für die in das Gehäuseinnere hineinführenden bzw. hinausführenden Rohre ein Dichteschluß sicher gestellt ist, der auch größten sowohl Temperatur- als auch Feuchtebelastungen stand hält.

Dadurch, daß die halbschalenförmig ausgestalteten Mäntel aus Blech sind, wird die Möglichkeit geschaffen, die Dichtungselemente unter hohem Anpreßdruck festzulegen.

In der Zeichnung sind drei Ausführungsbeispiele des erfindungsgemäßen Gehäuses für wärmeisolierte Armaturen und/ oder Flanschverbindungen schematsich dargestellt, und zwar zeigt,
- Fig. 1: eine erfindungsgemäßes Gehäuse nach einem ersten Ausführungsbeispiel im Längsschnitt, um einen Absperrschieber mit Betätigungsvorrichtung und zwei aus dem Gehäuse heraustretenden an die Armatur angeflanschten Leitungen montiert,
- Fig. 2: einen Querschnitt nach Linie II - II aus Fig. 1,
- Fig. 3: ein erfindungsgemäßes Gehäuse nach einem zweiten Ausführungsbeispiel in Längsschnitt um eine Absperrschieber mit Betätigungsvorrichtung und zwei aus dem Gehäuse heraustretenden an die Armatur angeflanschten Leitungen montiert,
- Fig. 4: einen Querschnitt nach Linie II - II aus Fig. 3,
- Fig. 5: eine Seitenansicht des erfindungsgemäßen Gehäuses entsprechend des ersten Ausführungsbeispieles gemäß Fig. 1 und 2,
- Fig. 6: eine Seitenansicht des erfindungsgemäßen Gehäuses entsprechend des zweiten Ausführungsbeispieles gemäß der Fig. 3 und 4,
- Fig. 7: eine Vorderansicht in Blickrichtung Pfeil III aus Fig.5,

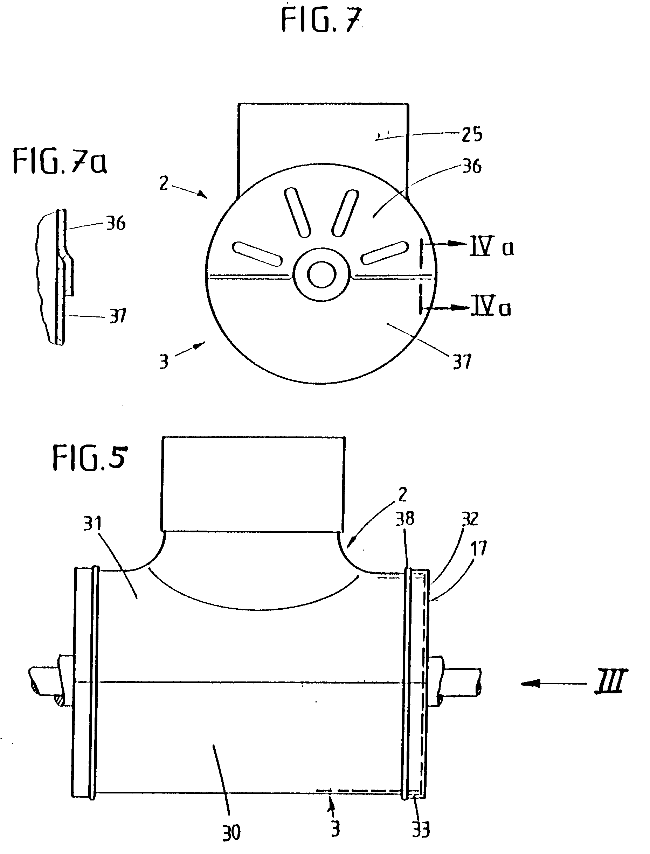

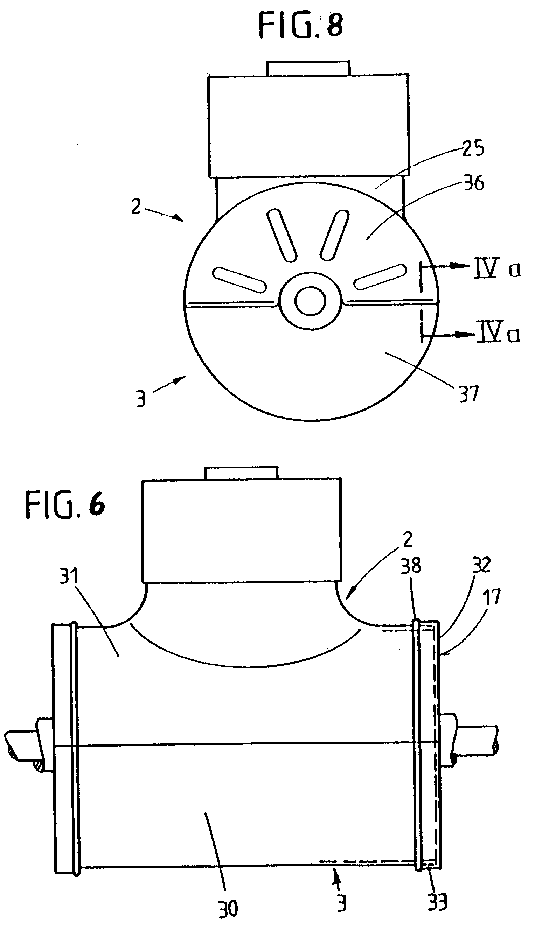

- Fig. 7 a.: eine Detailansicht im Schnitt der Überlappung der Verschlußdeckelteile nach Linie IV a - IV a aus Fig. 7 und 8,
- Fig. 8: eine Vorderansicht in Blickrichtung Pfeil III aus Fig. 6,

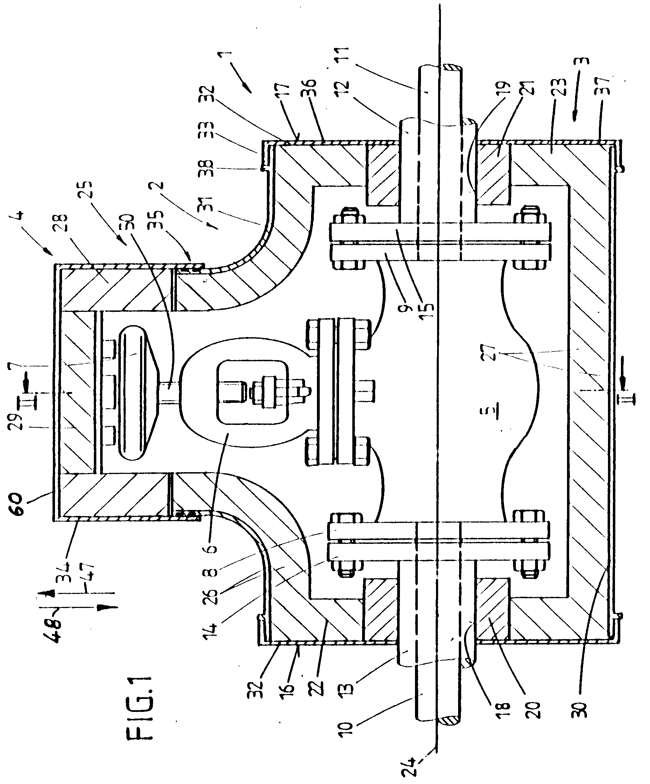

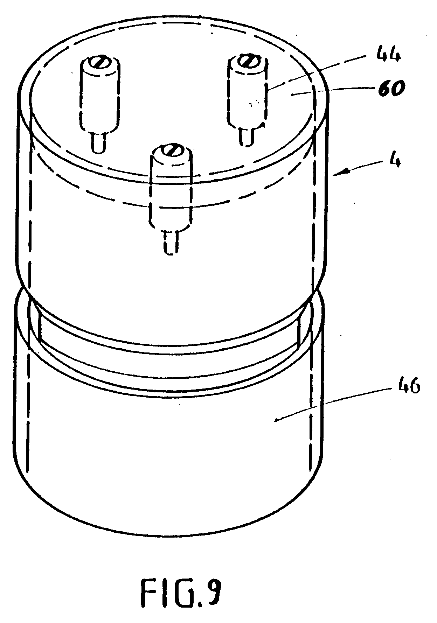

- Fig. 9: eine perspektivische Seitenansicht des Deckels aus Fig. 1 mit Adapter,

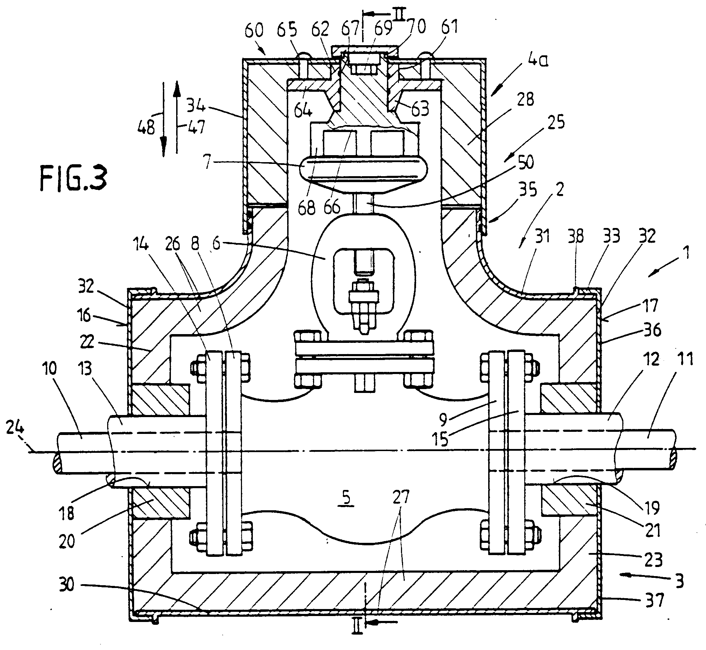

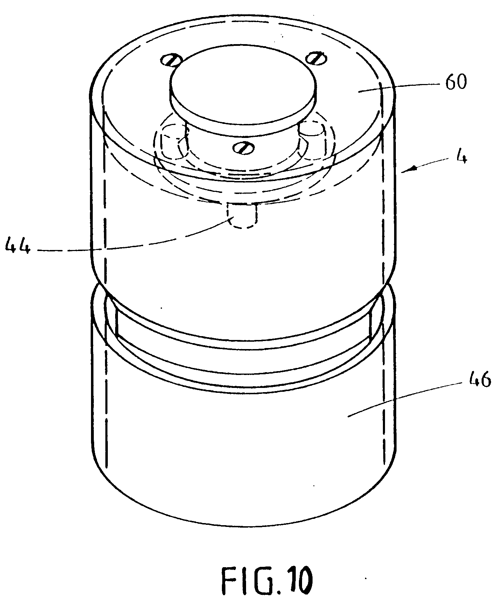

- Fig. 10: eine perspektivische Seitenansicht des Deckels aus Fig. 3 mit Adapter,

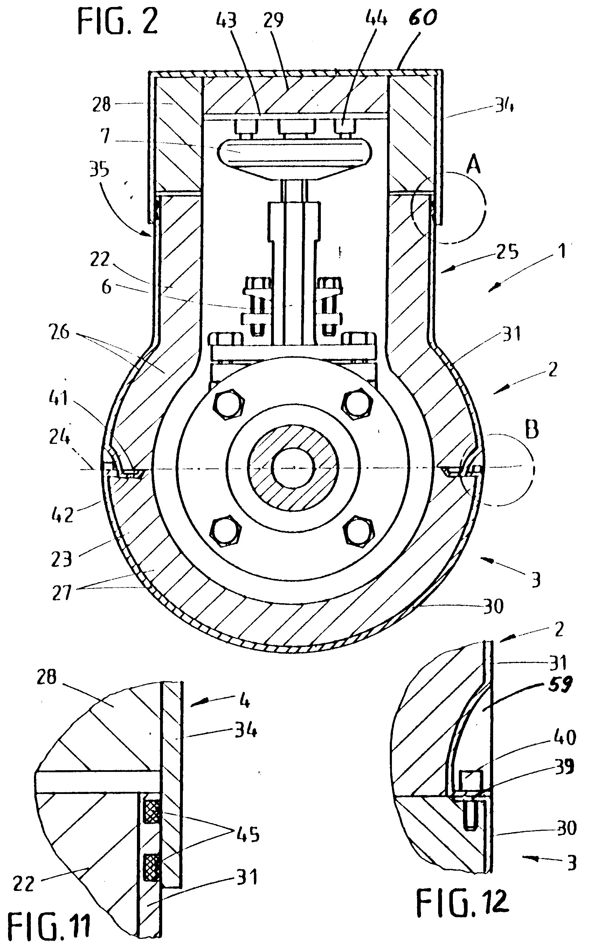

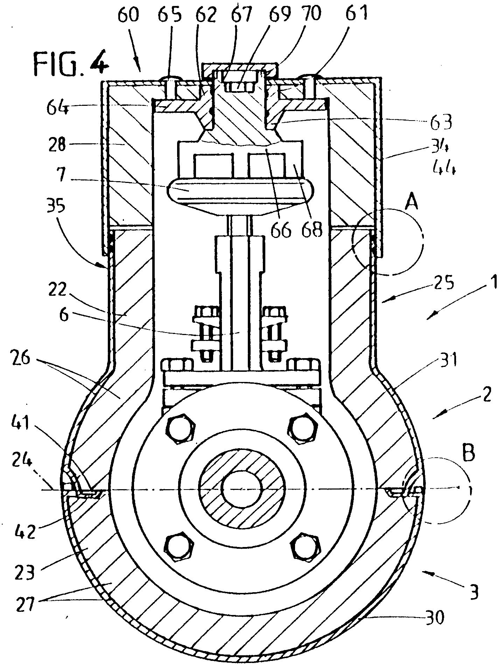

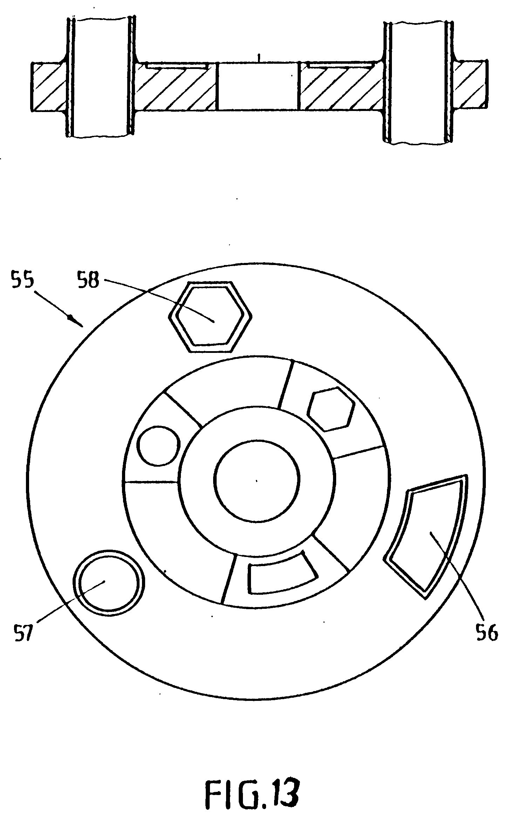

- Fig. 11: eine Einzelheit "A" aus Fig. 2 und 4,
- Fig. 12: eine Einzelheit "B" aus Fig. 2 und 4,
- Fig. 13: eine Aufnahmeplatte in Drauf- und Seitenansicht entsprechend des ersten und zweiten Aussführungsbeispieles,

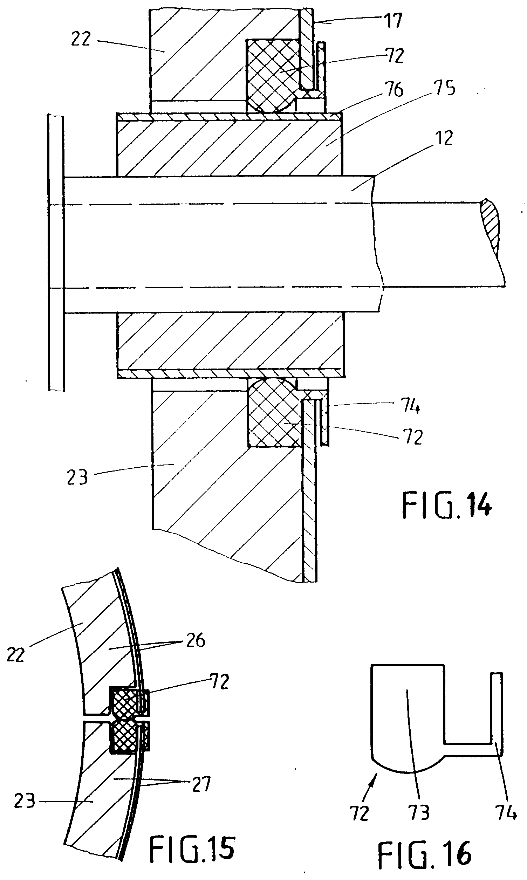

- Fig. 14: eine Detailansicht des Rohrleitungsdurchstoßes entsprechend eines dritten Ausführungsbeispieles,
- Fig. 15: eine Detailansicht der gegeneinander liegenden beiden Gehäuseteile entsprechend eines vierten Ausführungsbeispieles und
- Fig. 16: eine Detailansicht der Dichtungselemente aus Fig. 14 und 15 im Querschnitt.

Wie aus Fig. 1 ersichtlich, umschließt das im wesentlichen aus zwei Gehäuseteilen (2,3) und einem Betätigungdeckel (4) bestehenden Gehäuse (1), entsprechend des ersten Ausführungsbeispieles eine Armatur (5) um diese nach außen gegen Wärmeverlust zu isolieren.

Entsprechend des zweiten Ausführungsbeispieles weist das ansonsten baugleiche Gehäuse (1), wie aus Fig. 3 ersichtlich, nicht einen Betätigungsdeckel (4) auf, sondern vielmehr einen mit einem Betätigungsorgan (4a) versehenen Deckel (4).

Die Armatur (5) ist bei den dargestellten Ausführungsformen als Absperrschieber mit einer Betätigungsvorrichtung (6) ausgerüstet, die ein Handrad (7) aufweist.

Dabei ist es denkbar, an dem Handrad (7) auf der dem Deckel (4) entsprechend Fig. 1 bzw. der dem Betätigungsorgan (4a) entsprechend Fig. 3 zugewandten Seite, eine Aufnahemplatte (55) (siehe Fig. 13) anzuordnen.

An Flansche (8,9) der Armatur (5) ist jeweils eine Rohrleitung (10,11) angeflanscht.

Bei der Armatur (5) und deren Betätigungsvorrichtung (6) mit Handrad (7) handelt es sich um eine handelsübliche Type. Anstelle einer als Absperrschieber ausgebildeten Armatur (5) kann auch jede andere Armatur oder Flanschverbindung innerhalb des Gehäuses (1) vorgesehen sein.

Die Rohrleitungen (10,11) sind in dem hier vorliegenden Ausführungsbeispielen mit üblichen Isolierschläuchen (12,13) versehen, die bei diesen Ausführungsbeispielen bis unmittelbar an die Flansche (14,15) der Rohrleitungen (10,11) heranreichen.

Das Gehäuse (1) weist, entsprechend der Fig. 1 und 3, an seinen Stirnseiten (16,17) koaxial zu den Rohrleitungen (10,11) angeordnete Durchtrittsöffnungen (18,19) auf, deren Durchmesser durch den Innendurchmesser einer jeweils zweiteilig ausgestalteten Isoliermuffe (20,21) gebildet wird.

Diese Isoliermuffen (20,21) schließen in den Ausführungsbeispielen entsprechend Fig. 1 und 3 jeweils plan mit der entsprechenden Stirnseite (16) bzw. (17) bzw. der Isolierschicht der Stirnseite ab und enden in ihrer Längsausdehnung in einem Abstand zu den Rohrleitungsflanschen (14,15), wobei dieser Abstand in den Ausführungsbeispielen entsprechend Fig. 1 und 3 etwa 20 mm beträgt.

Die in Berührungskontakt stehende jeweilige Innenseite der Isoliermuffe (20) bzw. (21) und die entsprechende Außenseite des Isolierschlauches (12) bzw. (13) sind formschlüssig zueinander ausgebildet, bzw. die Innenseite der Isoliermuffe ist komplementär der Form der Außenseite des Isolierschlauches bei der Vorfertigung angepaßt, so daß ein Dichteschluß zwischen Isoliermuffe (20, 21) und Isolierschlauch (12,13), insbesondere durch Stauchungen bzw. Quetschungen der lsoliermuffe sichergestellt ist. Weiterhin wird erreicht, daß bei einer gewollten Demontage die Verbindung zwischen Isoliermuffe (20 bzw. 21) und Isolierschlauch (12 bzw. 13) ohne Probleme gelöst und hernach wieder hergestellt werden kann.

Desweiteren steht jede der beiden Isoliermuffen (20,21), entsprechend Fig. 1 und 3 mit ihrer dem Isolierschlauch abgewandtem Seite, d. h. ihrer Umfangsfläche mit der, einen Teil der Wandung (26,27) des Gehäuses (1) bildenden Isolierschicht (22,23) über deren gesamten Breite bzw. Stärke in direktem Berührungskontakt, wobei es zwischen der jeweiligen Isoliermuffe (20,21) und der Isolierschicht des Gehäuses (1) im Bereich ihres unmittelbaren Kontaktes ein Kleber angeordnet ist, der nicht lösbar ausgestaltet ist, so daß es zu einer nachhaltigen Verbindung zwischen der entsprechenden Isolierschicht (22,23) und der entsprechenden Isoliermuffe (20,21) kommt.

Das Gehäuse (1) weist, in Blickrichtung Fig. 1 oder 3, einen oberen (2) und unteren Gehäuseteil (3) auf, die im wesentlichen im Bereich der Längsachse (24) des Gehäuses (1) gegeneinander stoßen.

Sowohl der obere als auch der untere Gehäuseteil (2,3) ist im Querschnitt, wie aus Fig. 2 und 7; oder 4 und 8 ersichtlich, halbkreisförmig ausgestaltet, wobei der obere (2) der beiden Gehäuseteile (2,3) einen sogenannten Dom (25) aufweist, der die Betätigungsvorrichtung (6) nebst dem im hier vorliegenden Ausführungsbeispiel vorhandenen Handrad (7) umschließt.

Den oberen Abschluß des Domes (25) bildet im ersten Ausführungsbeispiel, entsprechend Fig. 1 und 2 ein sogenannter Betätigungsdeckel (4), der auf dem oberen Teil des Domes (25) aufgeschoben angeordnet ist.

Entsprechend des zweiten Ausführungsbeispieles gemäß Fig. 3 und 4 bildet den oberen Abschluß des Domes (25) ein, ein Betätigungsorgan (4a) aufweisender Deckel (4) ,der auf dem oberen Teil des Domes (25) wie im Ausführungsbeispiel (1) aufgeschoben angeordnet ist.

Die Wandung (26,27) des oberen und unteren Gehäuseteiles (2,3) nebst des Domes (25) besteht, entsprechend der beiden Ausführungsbeispiele gemäß Fig. 1,2; 3,4 aus einer Isolierschicht (22,23,28, 29), deren, dem Gehäuseinneren zugewandte Seite die Innenseite des Gehäuses (1) bildet, während die Außenseite durch die zweite, die Wandung (26,27) bildende Schicht (30,31,32,33,34), in dem hier vorliegenden Ausführungsbeispielen aus Blech bestehend, gebildet wird.

Die Wandung (26) des den einen Teil des Domes (25) bildenden Stutzens (35) ist dabei einstückig mit dem oberen Gehäusteil (2) ausgebildet und bei den hier vorliegenden Ausführungsbeispielen in seinem oberen Querschnitt kreisrund ausgestaltet.

Die ebenfalls kreisrund ausgestalteten Stirnseiten (16,17) des Gehäuses (1) weisen ebenfalls an ihrer, der Gehäusinnenseite zugewandten Seite die lsolierschicht (22,23) auf ,die einstückig mit der sich in Längsrichtung, d. h. an der Umfangsfläche des jeweilig oberen oder unteren Gehäuseteils (2,3) erstreckenden Isolierschicht (22,23) ausgebildet ist, ebenso wie mit der im Stutzen (35) des Domes (25) befindlichen Isolierschicht. Nach außen hin wird das Gehäuse (1) an seinen Stirnseiten (16,17) jeweils durch einen Verschlußdeckel (32) abgeschlossen.

Jeder der Verschlußdeckel (32) ist, wie aus Fig. 7 und 8 ersichtlich, zweistückig ausgestaltet und weist somit einen, in Blickrichtung Fig. 7 und 8 oberen (36) und unteren Teil (37) auf. Der obere (36) der beiden Verschlußdeckelteile (36,37) überlappt dabei den unteren Teil (37), in den hier vorliegenden Ausführungsbeispielen entsprechend Fig, 1 und 2, um etwa 10 mm ( siehe Fig. 7 a).

Im Bereich der Durchtrittsöffnungen (18,19) bzw. im Bereich der, die Durchtrittsöffnungen bildenden Isoliermuffen (20,21) weisen die Abschluß- bzw. Verschlußdeckel (36,37) eine kreisrunde koaxial zur Längsachse (24) angeordnete Öffnung auf, deren Durchmesser entsprechend des Ausführungsbeispieles gemäß Fig. 1 und 2,4 mm größer ist als der Außendurchmesser des Isolierschlauches (12,13).

Wie aus Fig. 5 und 6 ersichtlich, weist die Außenwandung (30,31) der Gehäuseteile (2,3) umlaufend im einem Abstand von 20 mm bis 50 mm zu den Stirnseiten (16,17) eine Stabilisierungs- und Begrenzungswulst (38) auf, die in den hier vorliegenden Ausführungsbeispielen entsprechend der Fig. 5 und 6 in einem Abstand von etwa 3 bis 4 cm umlaufend angeordnet ist, wobei jede der Wülste (38) natürlicher Weise ebenfalls jeweils zweiteilig ausgestaltet ist.

Zur Montage der Verschlußdeckel (32) werden die entsprechenden Deckelteile (36,37) mit ihren, die äußere Wandung bzw. der Umfangsfläche der zugehörigen Gehäuseteile (2,3) umschließenden Abschnitte (33) über die Stirnseite (16,17) der einzelnen Gehäuseteile (2,3) bis an die Begrenzungswulst (38) geschoben, um sodann mittels einer Rollnahtschweißung dort festgelegt zu werden.

Wie aus den Fig. 2 und 4 ersichtlich, stoßen sowohl die Außenwandung (30,31) als auch die den Innenraum des Gehäuses (1) begrenzenden Isolierschichten (22,23) auf der horizontalen Ebene der Längsachse (24) gegeneinander, wobei die Außenwandung (30) des unteren Gehäuseteiles (3) an ihrer, dem oberen Gehäuseteil (2) zugewandten Seite einen flanschartig nach innen gerichteten Fortsatz (39) aufweist, der über Schrauben (40) mit, im oberen Gehäuseteil (2), d . h. an dem dem unteren Gehäuseteil (3) zugewandten Ende in der Außenwandung angeordnete sickenartige Vertiefungen (59) (siehe Fig. 12) derart in Eingriff gebracht werden kann, daß der obere und unter Gehäuseteil (2,3) gegeneinander festgelegt wird.

Diese sickenartigen Vertiefungen (59) sind dabei, in Blickrichutng Fig. 1 oder 3, längst des Gehäuses (1) bzw. längs der Längsachse (24) angeordnet.

Desweiteren weist die dem unteren Gehäuseteil (3) zugewandte Seite der Isolierschicht (22) des oberen Gehäuseteiles (2) eine Feder in Form eines trapezförmigen Vorsprunges (41) auf, die in eine angepaßte Nut (42), angeordnet in der dem oberen Gehäuseteil (2) zugewandten Seite der Isolierschicht (23) des unteren Gehäuseteiles (3) eingreift, so daß Feder (41) und Nut (42) eine Nut - Feder - Verbindung bilden, die die Gehäuseteile (2,3) axial und radial arretieren.

Zusätzlich ist zwischen den, auf der Ebene der Längsachse (24) aufeinander stoßenden Isolierschichten (22,23) ein lösbarer mehrfach haftender Kleber angebracht, der bei entsprechender Zugbeanspruchung ein Lösen des unteren und oberen Gehäuseteiles (2,3) voneinander ermöglicht.

Wie aus Fig. 2 oder 4 weiterhin ersichtlich, wird der Stutzen (35) des Domes (25) des oberen Gehäuseteiles (2) von dem ebenfalls einen Teil des Domes (25) bildenden Deckel (4) umfaßt, wobei es sich bei dem Deckel (4) entsprechend des ersten Ausführungsbeispieles gemäß Fig. 1 und 2 um einen Betätigungsdeckel handelt, während der Deckel (4) gemäß des zweiten Ausführungsbeispieles entsprechend der Fig. 3 und 4 ein Betätigungsorgan (4 a) aufweist. Die Innenseite des Deckels (4) wird durch eine Isolierschicht (28,29) gebildet, die sowohl die Innenseite der Umfangsfläche als auch die Innenseite der Deckelfläche, d. h. der oberen Fläche, bildet.

Dabei kann die Isolierschicht (28,29) einstückig ausgebildet sein, d . h . sowohl Umfangfläche als auch Deckelfläche einstückig isolieren oder aber zweistückig, d. h. eine die Umfangsfläche isolierende Isolierschicht (28) und eine, lediglich die Deckelfläche isolierende Isolierschicht (29) aufweisen.

In den vorliegenden Ausführungsbeispielen ist die Isolierschicht (28,29) einstückig aus einem 13 mm starken Venylkunststoff ausgebildete.

Die Außenseite der Wandung wird aus einem geeigneten schlag- und stoßfestem und gegen die vorkommenden Medien auch beständigem sowei ozonbeständigem Material, wie z. B. nicht rostendem Stahl, wie im hier vorliegenden Ausführungsbeispiel verwandt, gefertigt.

Die Außenschicht (34) der Umfangswandung des Deckels (4) steht dabei, wie aus Fig. 2 oder 4 ersichtlich, über die Isolierschicht (28) in Richtung des Gehäuses (1) über, d. h. sie endet in einem Abstand zu der dem Gehäuse (1) zugewandten Seite der Isolierschicht (28).

Entsprechend des ersten Ausführungsbeispieles, d. h. gemäß der Fig,. 1 und 2, ist auf der, der Betätigungsvorrichtung (6) zugewandten Seite der ,die Deckeloberseite (60) isolierenden Isolierschicht (29), eine, im hier vorliegenden Ausführungsbeispiel kreisrund ausgestaltete PVC - Platte (43) angeordnet, die in ihren Ausmaßen exakt dem Innendurchmesser des, aus Isolierschicht (28) und Außenblech (34) bestehenden Deckelumfanges entspricht.

Dabei ist die PVC - Platte (43) entweder durch Verkleben an der Isolierschicht (28) angebracht oder aber auch durch Verschrauben mit der Deckeloberseite (60).

An der, der Betätigungsvorrichtung (6) zugewandten Seite der PVC - Platte (43) befinden sich drei Betätigungsstifte bzw. Kopfstifte (44), die mit dem, im hier vorliegenden Ausführungsbeispiel dargestellten Handrad (7) in Betätigungseingriff stehen und auf einer gedachten Dreieckslinie auf der PVC - Platte (43) derart angeordnet sind, daß sie in ihrer Längsausdehnung noch an der Spindelführung vorbei geführt werden und in diesem Bereich enden ( hier nicht dargestellt).

Wie aus Fig . 11 ersichtlich, steht der Betätigungsdeckel (4), entsprechende des ersten Ausführungsbeispieles, mit dem Dom (25) bzw. der Außenwandung (31) des Domes über zwei Lippendichtungen (45), angeordnet am oberen Rand des Stutzens (35) des Domes (25) in Eingriff, so daß auch dann, wenn die Isolierschicht (28) der Umfangsfläche des Deckels (4) nicht mit der Isolierschicht (22) des Stutzens (35) des Gehäuses (1) in Eingriff steht, eine Isolierung zwischen Deckel (4) und Gehäuse (1) sicher gestellt ist.

Die Betätigungsstife (44) können verschiedene Ausführungsformen aufweisen, im hier vorliegenden Ausführungsbeispiel handelt sich es sich dabei um sogenannte Kopfstifte, die z. B. einstückig mit der PVC - Platte (43) ausgestaltet sein können und an ihrer dem Handrad (7) zugewandten Seite jeweils einen Metallstift aufweisen, der z. B. mit den Speichen des Handrades (7) in Eingriff gelangend ausgebildet ist.

Wie aus Fig. 9 ersichtlich, ist es möglich, den Betätigungsdeckel (4) durch einen Adapter (46) derart zu verlängern, daß für den Fall, daß z. B. ein Betätigungsorgan (6) bzw. Betätigungsorgane (6) verschiedener Länge zum Einsatz gelangen, das erfindungsgemäße Gehäuse (1) derat zu verändern ist, daß der Betätigungsdeckel (4) bzw. der Deckelboden (60) in einem größeren als in Fig. 1 und 2 dargestellten Abstand zum Betätigungsorgan (6) angeordnet wird.

Dazu ist die Außenfläche des Betätigungsdeckels (4) an ihrem unteren Ende, d. h. dem Gehäuse (1) zugewandten Ende konisch bzw. komplementär zum Innendurchmesser des Adapters (46) ausgestaltet, um so mit dem Adapter (46) in Eingriff gebracht zu werden, so daß dann der Adapter (46) in der zuvor beschriebenen Art und Weise den Stutzen ( 35) des Domes (25) umgreifen.

Die Montage des erfindungsgemäßen Gehäuses (1) wird derart vorgenommen, daß die Isoliermuffen (20,21) die Standardisolierungen (12,13) der Rohrleitungen (10,11) nach der Montage unter Quetschung umgreifen.

Bei dem zweiten Ausführungsbeispiel gemäß der Fig. 3 und 4 weist die aus der Deckeloberseite (60) und der die Deckeloberseite (60) isolierenden Isolierschicht (29) bestehende Deckelfläche eine koaxial angeordnete Öffnung (61) zur Aufnahme des Betätigungsorganes (4 a) auf, in die ein kreisrund und komplementär zur Öffnung (61) ausgestaltetes und ein, eine hohlzylinderische Führungsfläche bildendes Führungselement (62) hineinragt, das an seiner der Deckeloberfläche (60) zugewandten Seite plan mit der Deckeloberfläche abschließt und in einem Abstand zur Isolierschichtinnenseite der Deckelfläche (60) endet, wobei die, der hohlzylindrischen Führungsfläche abgewandte Seite, des nach innen ragenden Führungselementes (62), d. h. dessen Außenseite (63) konusartig ausgestaltet ist und in eine, die gesamte Innenseite der Isolierschicht (29) abdeckende Isolierplatte (64) übergeht. Die konische Ausgestaltung des hohlzylinderförmigen Führungselementes (62) kann dabei umlaufend ausgestaltet sein oder auch nur aus, auf der Umfangsfläche angeordneten Rippen bestehen.

Das Führungselement (62) ist mittels, im hier vorliegenden Ausführungsbeispiel dreier Befestigungsschrauben (65) festgelegt, wobei die Befestigungsschrauben (65) die Deckelfläche (60) von außen durchdringen und in dem Hartkunststoff, d. h. in dem die Innenseite der Isolierschicht abdeckenden Teil (64) endend verschraubt sind.

In dem hohlzylinderförmig ausgestalteten, die Führungsfläche bildenden Teil des Führungselementes (62) ist ein Betätigungsteil (66) angeordnet, daß mittels verschiedener, im Hohlzylinder (62) und an seiner Außenseite angeordneter Dichtungselemente (67) dort drehbar festgelegt ist und an seiner, dem Handrad (7) zugewandten Seite Betätigungsstifte (68) aufweist, die in die Speichen oder bzw. zwischen die Speichen des Handrades (7) greifen und so mittels des Betätigungsteiles (66) eine Bedienung des Handrades (7) ermöglichen.

Auf seiner dem Handrad (7) abgewandtem Seite weist das Betätigungsteil (66) im hier vorliegenden Ausfühurngsbeispiel ein, ein sechskant aufnehmendes sechskantförmiges Sackloch (60) auf, wobei das Betätigungsteil (66) im hier vorliegenden Ausführungsbeispiel die Deckelfläche (60) um ein Stück überragt und an seiner Außenseite ein Gewinde (70) aufweist, mit dessen Hilfe, daß die Deckelfläche (60) überragende Endstück des Betätigungsteiles (66) mittels einer Haltekappe (71) abgedeckt werden kann, die ihrerseits ein komplementär ausgestaltetes Innengewinde aufweist, so daß die Haltekappe (71) lösbar mir dem Betätigungsteil (66) in Eingriff gebracht werden kann.

Es ist ebenso denkbar, auf die Betätigungsstifte (68) zu verzichten und statt dessen ein z. B. zentral angeordnetes Betätigungsorgan vorzusehen, mit dessen Hilfe direkt Eingriff in die Gewindespindel des Schiebers genommen werden kann.

Das Führungselement bzw. der die Innenseite der Deckelfläche isolierenden Isolierschicht (29) abdeckende Teil (64) entspricht in seinen Ausmaßen exakt dem Innendurchmesser des aus Isolierschicht (29) und Außenblech (34) bestehenden Deckels und kann alternativ zur Befestigung mit Befestigungsschrauben, ebenso durch Verkleben auf der Innenseite der Isolierschicht (29) angeordnet werden.

Wie aus Fig. 11 ersichtlich, steht der Deckel (49) mit dem Dom (25) bzw. der Außenwandung (31) des Domes (25) über zwei Lippendichtungen (45) angeordnet am oberen Rand des Stutzens (35) des Gehäuses (1) in Eingriff, so daß auch dann, wenn die Isolierschicht (28) der Umfangsfläche des Deckels (4) nicht mit der Isolierschicht (22) des Stutzens (35) des Gehäuses (1) in Eingriff steht, eine Isolierung zwischen Deckel (4) und Gehäuse (1) sicher gestellt ist.

Bei dem hier vorliegenden zweiten Ausführungsbeispiel gemäß der Fig. 3 und 4 kann auf eine derartige Anordnung der Lippendichtung (45) auch ganz verzichtet werden, da bei Betätigung des Betätigungsorganes (4 a) ein Anheben des Deckels (4) nicht notwendig ist.

Die Betätigungsstifte (68) können verschiedene Ausführungsformen ausweisen. Im hier vorliegenden Ausführungsbeispiel handelt es sich dabei um sogenannte Kopfstifte, die z. B. einstückig mit dem Betätigungsteil (66) ausgestaltet sind und an ihrer dem Handrad (7) zugewandten Seite stumpf enden.

Es ist jedoch ebenso denkbar, daß die Stifte (68) an ihrer dem Handrad (7) zugewandten Seite jeweils einen Metallstift aufweisen, der z. B. mit den Speichen des Handrades (7) in Eingriff gelangend ausgebildet ist.

Wie aus Fig. 10 ersichtlich, ist es möglich, den ein Betätigungsorgan (4 a) aufweisenden Deckel (4) durch einen Adapter (46) derart zu verlängern, daß für den Fall, daß z. B. ein Betätigungsorgan (6) bzw. Betätigungsorgane (6) verschiedener Länge zum Einsatz erlangen, das erfindungsgemäße Gehäuse (1) derart zu verändern ist, daß der Deckel (4) bzw. der Deckelboden (60) in einem größeren, als in den Fig. 3 und 4 dargestellten Abstand zum Betätigungsorgan (6) angeordnet wird.

Dazu ist die Außenfläche des Deckels (4) an ihrem unteren Ende, d. h. dem Gehäuse (1) zugewandten Ende konisch bzw. komplementär zum Innendurchmesser des Adapters (46) ausgestaltet, um so mit dem Adapter (46) in Eingriff gebracht zu werden, so daß dann der Adapter (46) in der zuvor beschriebenen Art und Weise den Stutzen (35) des Domes (25) umgreift.

Die Montage des erfindungsgemäßen Gehäuses, entsprechend des ersten und zweiten Ausführungsbeispieles, d. h. entsprechend der Fig. 1 und 2 sowie 3 und 4 wird derart vorgenommen, daß die Isoliermuffen (20,21) die Standardisolierungen (12 ,13) der Rohrleitungen (10,11) nach der Montage unter Quetschungumgreift.

Sollten die Rohrleitungen (10,11) keine Standardisolierung (12,13) aufweisen oder eine Standardisolierung (12,13) mit zu geringem Durchmesser, so ist es erforderlich, die Rohrleitung (10,11) im Bereich der Isoliermuffen (20,21) zu umwickeln bzw. mit einem geeigneten Material zu umkleben.

Zur Mantage des Gehäuses (1) wird zunächst der untere Gehäuseteil (3) an das Rohr (10,11) angehalten, um sodann den oberen Gehäuseteil (2) mit dem unteren Gehäuseteil (3) in Kontakt zu bringen. Nach dieser Kontaktierung der beiden Gehäuseteile (2,3) werden die beide Gehäuseteile (2,3) wie zuvor beschreiben miteinander verschraubt und dadurch festgelegt. Nach einer derartigen Verschraubung kann nun der Deckel (4) auf den Stutzen (35) des Domes (25) des Gehäuses (1) aufgebracht werden.

Es ist jedoch ebenso möglich, daß der Deckel (4) bereits vor der Montage der Gehäuseteile (2,3) auf dem Stutzen (35) des Domes (25) des Gehäuses (1) aufgebracht wurde.

Durch die Quetschung von Isoliermuffe (21 bzw. 20) und Isolierstück (12,13) bzw. der Isoliermuffe kommt es zu einem Dichteschluß der größten Belastungen stand hält und keinerlei, im hier vorliegenden Ausführungsbeispiel Wärmeverluste erlaubt.

Wie in den Fig. 1 und 3 dargestellt, stoßen in Grundstellung, d. h. in einer Stellung in der die Betätigungsvorrichtung (6) bzw. das Handrad (7) nicht betätigt wird, die den Innendurchmesser des Deckels (4) festlegende Isolierschicht (28) der Umfangsfläche des Deckels (4) gegen die, den Innendurchmesser des Stutzens (35) festlegende Isolierschicht (22) des Gehäuses (1) derart gegeneinander, daß zwischen beiden Isolierschichten (22,28) ein lösbarer, mehrfach haftender Kleber angeordnet ist, der ein abziehen des Deckels (4) in Richtung Pfeil (47)erlaubt und bei harabdrücken des Deckels (4) in Richtung Pfeil (48) erneut haftet.

Bei dem ersten Ausführungsbeispiel gemäß der Fig. 1 und 2, ist es nicht wie bis bisher erforderlich, um die Armatur (5) zu betätigen, direkt Zugriff auf das Handrad (7) zu nehmen, sondern es reicht vielmehr aus, den Betätigungsdeckel (4) in Pfeilrichtung (47) ein Stück anzuheben, wobei, wie aus Fig. 11 ersichtlich, auch in diesem Fall ein ausreichender Dichteschluß zwischen Deckel (4) und Stutzen (35) verbleibt, da die Deckelaußenwandung (34) mit dem Stutzen (25) über zwei umlaufend angeordnete Lippendichtungen (45) in Kontakt steht.

Nach dem Verfahren des Deckels (4) in Pfeilrichtung (47) kann nun der Deckel (4) wahlweise links- oder rechtherum gedreht werden, so daß dies dazu führt, daß die Stifte (44) mit dem Handrad (7) bzw. den Speichen des Handrades (7) in Eingriff gelangen und/oder bereits waren und durch vorheriges lösen der Haftung zwischen den Isolierschichten (22,28) so eine Drehung des Deckels (4) ermöglicht wird, dies zu einer Drehung des Handrades (7) führt und damit zu einer Betätigung des hier dargestellten Schiebers (5) führt, ohne daß dies eine Öffnung des Gehäuses (1) erforderlich ist.

Es ist jedoch auch möglich, das Handrad (7) mit einer, in Fig. 13 dargestellten Aufnahmeplatte (55) zu versehen, die entsprechend des Handraddurchmessers ausgebildet sein kann.

Dabei weist die Aufnahemplatte (55) Führungen (56;57;58) auf, die der Aufnahme der Betätigungsstifte (44) dienen.

Die Führungen (56;57;58) können dabei, wie aus Fig. 13 ersichtlich verschieden ausgeformt sein.

Desweiteren ist ebenso denkbar, mittig an der Kopffläche (33) des Deckels (4) eine Nase vorzusehen, auf die wahlweise vor Mantage des Gehäuses (1) oder bei Fertigung des Gehäuses (1) ein Betätigungsmodul aufgesteckt werden kann, daß an seiner, der Nase zugewandten Seite ein mit der Nase in Eingriff zu bringendes, komplemetär dazu ausgebildetes, aus z. B. Metall bestehendes Verbindungselement aufweist und an seiner, der, der Betätigungsvorrichtung (6) zugewandten Seite, ein Metallelement aufweist, daß mit der Gewindespindel (50) der Betätigungsvorrichtung (6) gekoppelt werden kann, d. h. mit z. B. einem am Kopfende der Gewindespindel (50) vorhandenen Vierkant in Eingriff gelangt und so eine drehfeste Verbidnung mit diesem eingeht, während das Mittelteil aus Hartgummi besteht, um so keine Wärme- oder Kältbrücke zu bilden.

Es wäre jedoch desweiteren möglich, dieses Teil auf die z. B. PVC- Platte (43) aufzubringen.

Weiterhin ist es denkbar, bei einer Ausgestaltung des Gehäuses (1) mit Betätigungsmodul, ganz auf das Handrad (7) zu verzichten, da dann eine Drehung bzw. Betätigung der Betätigungsvorrichtung (6) und damit des Schiebers (5) ermöglicht wird, in dem, wie zuvor beschrieben, der Deckel in Pfeilrichtung (47) angehoben wird, um sodann wahlweise nach linke oder rechts gedreht zu werden und um nach gewünschter Betätigung in seiner Ausgangsposition durch herabdrücken zurückgebracht zu werden.

Bei dem zweiten Ausführungsbeispiel gemäß der Fig. 3 und 4 ist es jedoch auch denkbar, den Deckel (4), ähnlich wie das obere und untere Gehäuseteil (2,3) mit dem Stutzen (25) durch z. B. eine Schraubverbindung zu verbinden oder aber durch ein anderes hier nicht aufgezeigtes Verbindungsmittel.

Soll das Handrad (7) gemäß dem zweiten Ausführungsbeispiel entsprechend der Fig. 3 und 4 bewegt werden, wird zunächst einmal die Haltekappe (71) vom Kopfende des Betätigungsteiles (66) abgeschraubt, so daß Innensechskant frei liegt und z. B. ein Imbusschlüssel in das seckskantförmig ausgestaltete Sackloch (69) eingeführt werden kann und so das Betätigungsteil (66) in eine links oder rechts gerichtete Drehbewegung versetzt werden kann und damit daß mit ihm über die Betätigungsstifte (68) in Kontakt stehende Handrad (7).

Nach erfolgter und gewünschter Drehbewegung wird dann der Imbusschlüssel entfernt und die Haltekappe (71) erneut auf das Kopfende des Betätigungsteiles (66) verschraubt.

Der ausreichende nach außen notwendige Dichtschluß im Bereich des Betätigungsteiles (66) wird im hier vorliegenden Ausführungsbeispiel durch die Dichtungsringe (67) gewährleistet.

Durch den erfindungsgemäßen Aufbau ist somit eine Betätigung des Handrades (7) bzw. des Schiebers (5) möglich, ohne das Gehäuse (1) zu öffnen bzw. das ein Luft- und/oder Wärmeaustausch zwischen Gehäuseinnerem und Gehäuseäußerem statt findet.

Es ist jedoch auch möglich, das Handrad (7) mit einer, in Fig. 13 dargestellten, Aufnahmeplatte (55) zu versehen, die entsprechend des Handraddurchmessers ausgebildet sein kann. Dabei weist die Aufnahmeplatte (55) Führungen (56;57;58) auf, die der Aufnahme der Betätigungsstifte (68) dient.

Die Führungen (56;57;58) können, wie aus Fig. 8 ersichtlich, verschieden geformt sein.

Bei einer weiteren Variante des zweiten Ausführungsbeispieles ist es vorgesehen, mittig an der, dem Schieber (5) zugewandten Seite des Betätigungselementes (66) eine Nase vorzusehen, auf die wahlweise vor Montage des Gehäuses (1) oder bei Fertigung des Gehäuses (1) ein Betätigungsmodul aufgesteckt werden kann, daß an seiner, der Nase zugewandten Seite ein, mit der Nase in Eingriff zu bringendes und komplementär dazu ausgebildetes aus z. B. Metall bestehendes Verbindungselement aufweist und an seiner, der Betätigungsvorrichtung (6) zugewandten Seite ein Metallelement aufweist, daß mit der Gewindespindel (50) der, der Betätigungsvorrichtung (6) zugewandten Seite gekoppelt werden kann, d. h. mit z. B. einem am Kopfende der Gewindespindel (50) vorhandenen Vierkant in Eingriff gelangt und so eine drehfeste Verbindung mit diesem eingeht, so daß eine Betätigung des Schiebers auch ohne vorhandenem Handrad (7) oder Aufnahmeplatte (55) möglich ist.

Bei einer weiteren Variante des zweiten Ausführungsbeispieles, des Gehäuses (1) mit Betätigungsmodul, kann auf das Handrad (7) somit gänzlich verzichtet werden, da dann eine Drehung bzw. Betätigung der Betätigungsvorrichtung (6) und damit des Schiebers (5) ermöglicht wird, in dem, wie zuvor beschrieben, das Betätigungsmodul wahlweise in eine nach links oder nach rechts gerichtete Drehbewegung versetzt werden kann.

Bei einem weiteren Ausführungsbeispiel gemäß der Fig. 14 bis 16, daß sowohl beim ersten als auch zweiten Ausführungsbeispiel, d. h. bei den Varianten entsprechende der Fig. 1 und 2 oder 3 und 4 zum Einsatz gelangen kann, ist zwischen dem oberen und unteren Gehäuseteil 2,3 nicht wie bei den bisher beschriebenen Varianten eine Nut - Feder - Verbindung (42,41) vorgesehen, vielmehr weisen die Wandungen (26,27) der oberen und unteren Gehäuseteile (2,3) jeweils an der einander zugewandten Seite ein Dichtungselement (72) auf, daß aus einem, z. B. Venylkautschuk bestehen kann.

Das Dichtungselement (72) besteht dabei aus einem Hauptkörper (73), der an seiner, in Blickrichtung Fig. 16 Unterseite bzw. der dem oberen oder unteren Gehäuseteil (2,3) zugewandten Seite konvex ausgestaltet ist, d. h. eine nach außen gerichtete Wölbung aufweist, die bei zusammengebauten Gehäuseteilen (2,3) gegen die konvexe Fläche des gegenüberliegenden Dichutngselementes (72) stößt und unter Druck gegeneinander gepreßt wird.

Desweiteren weist das Dichtungselement (72) einen winkelförmigen Fortsatz (74) auf, in den, wie aus Fig. 15 ersichtlich, die jeweilige Außenwand (30,31) mündet bzw. eingreift, so daß die Außenwand (30,31) endseitig von dem winkelförmigen Fortsatz (74) umschlossen wird.

Der Hauptkörper (73) ist in die, sich auf der Innenseite der Außenwandung (30,31) anschließende Isolierschicht (22,23), wie in Fig. 15 dargestellt, eingepaßt, wobei wenigstens die konvexe Erhebung des Hauptkörpers (73) über die einander zugewandten Seiten der Isolierschicht (22,23) hinausragt.

Die beiden Gehäuseteile (2,3) werden nicht, wie in den beiden vorhergehenden Ausführungsbeispielen beschrieben, durch eine Verschraubung miteinander verbunden, sondern vielmehr über sie umschlingende Bänder.

Wie aus Fig. 14 ersichtlich sind die Durchtrittsöffnungen (18,19) der Gehäuseteile (2,3) bei diesem, hinsichtlich der Durchführungen weiteren Ausführungsbeispiel ebenfalls anders ausgestaltet, so daß die Isolierschläuche (12,13) von einer einteilig oder zweitieilig ausgestalteten Isoliermuffe (25) umschlossen sind, die nicht auf einer Ebene mit den Stirnseiten (16,17) des Gehäuses (1) abschließt, sondern diese an der Gehäuseaußenseite überragt und in einem Abstand zur Gehäuseinnenseite, d. h. in das Gehäuseinnere hinein ragend endet.

Auf der dem Isolierschlauch (12,13) abgewandten Seite der Isoliermuffe (75) wird diese, im hier vorliegenden Ausführungsbeispiel, von einem Blechmantel (76) umschlossen. Dieser Blechmantel (76) besteht aus zwei Halbschalen.

Der Blechmantel (76) steht bei zusammengebautem Gehäuse (1) in direktem Kontakt mit den, auch in diesem Bereich in der Wandung (22,23), wie zuvor beschrieben angeordneten Dichtungselementen (72), die unter Druck an dem Blechmantel (76) mit Ihrer konvexen Fläche anliegen.

Der obere und untere Verschlußteil (36, 37) bzw. der obere und untere Deckelteil (36,37) der Stirnseiten (16,17) greift ebenfalls in den winkelförmigen Fortsatz (74) des Dichtungselementes (72) ein und endet in einem Abstand zum Blechmantel (76) der Isoliermuffe (75).

Das Dichtungselement (72) kann einstückig umlaufend im jeweiligen oberen und untern Gehäuseteil (2,3) festgelegt sein oder auch mehrstückig ausgestaltet sein.

Desweiteren ist es denkbar, wie in Fig. 15 dargestellt, die gegenüberliegenden bzw. gegeneinander gepreßten Dichtungselemente (72) mittels eines hier nicht dargestellten Zentrierstiftes, bzw. hier nicht dargestellter Zentrierstifte der oder die sowohl senkrecht in den Dichtungselementen (72) angeordnet sein können, als auch von außen diagonal oder in einer anderen Richtung durch die Dichtungselemente einzubringen sind zu zentrieren.

## Patentansprüche

1. Gehäuse für wärmeisolierte Armaturen und/oder Flanschverbindungen, mit zwei Gehäuseteilen mit vorzugsweise zwei Öffnungen für die Rohrleitungen, wobei die Gehäuseteile benachtbart der Gehäuseteilungebene lösbar miteinander zu verbinden sind, **dadurch gekennzeichnet**, daß wenigstens eines der Gehäuseteile (2,3) einen die Betätigungsvorrichtung (6) aufnehmenden als Dom ausgestalteten Vorsprung (25) aufweist, daß wenigstens eine Einrichtung (4;4a) zur Bedienung der Betätigungsvorrichtung (6) vorgesehen ist, und daß die für die Durchführung der Rohrleitungen (10,11) vorgesehenen Öffnungen (18,19) durch jeweils eine Isoliermuffe (20, 21) gebildet sind.

2. Gehäuse nach Anspruch 1, dadurch gekennzeichnet, daß die Einrichtung (4) zur Bedienung der Betätigungsvorrichtung (6) einen Teil des Domes (25) bildend ausgestaltet ist.

3. Gehäuse nach Anspruch 1, dadurch gekennzeichnet, daß die Einrichtung (4a) zur Bedienung der Betätigungsvorrichtung (6) eine wenigstens die Außenfläche des Domes (25) wenigstens teilweise durchdringende Einrichtung (4a) zur Bedienung der Betätigungsvorrichtung (6) ist.

4. Gehäuse nach einem der Ansprüche 1 bis 3, dadurch gekennzeichnet, daß der Dom (25) aus einem mit dem ihm zugeordneten Gehäuseteil (2) eine Baueinheit bildenden Stutzen (35) und einem diesen Stutzen (35) an der dem Gehäuseteil (2) abgewandten Seite verschließenden Deckel (4) besteht.

5. Gehäuse nach einem der Ansprüche 1, 2 oder 4, dadurch gekennzeichnet, daß der Deckel (4) die zur Bedienung der Betätigungsvorrichtung (6) ausgebildete Einrichtung ist.

6. Gehäuse nach einem der Ansprüche 1 bis 5, dadurch gekennzeichnet, daß die Wandung (26,27) der Gehäuseteile (2,3) sowie des zugehörigen Domes (25) eine Außen- (30,31;32,34) und eine Innenwandung (22,23;28,29) aufweisend ausgestaltet ist.

7. Gehäuse nach Anspruch 6, dadurch gekennzeichnet, daß die Außenwandung (30,31; 32,34) aus einem schlag- und stoßfestem Material wie z. B. nicht rostendem Blech besteht und die Innenwandung (22,23; 28,29) aus einem wärmeisolierenden Material.

8. Gehäuse nach einem der Ansprüche 1 bis 7, dadurch gekennzeichnet, daß der als Stutzen (35) ausgebildete Teil des Domes (25) einstückig mit der Außenwandung (31) des zugeordneten Gehäuseteiles (2) ausgestaltet ist.

9. Gehäuse nach einem der Ansprüche 1 bis 8, dadurch gekennzeichnet, daß die vom Kopfende (60) des Deckels (4) sich erstreckende Außenwandung (34) der Umfangsfläche des Deckels (4), die ihr zugewandte Seite des Stutzens (35) umgreifend angeordnet und ausgestaltet ist und daß das vom Kopfende (60) des Deckels (4) abgewandte Ende der Außenwandung (34) in einem größeren Abstand zum Kopfende (60) des Deckels (4) endet, als das vom Kopfende (60) des Deckels (4) abgewandte Ende der die Innenseite der Umfangsfläche bildenden Innenwandung (28).

10. Gehäuse nach Anspruch 9, dadurch gekennzeichnet, daß der Deckel (4) mit seiner Innenwandung (28) der Umfangsfläche, in seiner Grundstellung, gegen die Innenwandung (22) des Stutzens (35) stoßend angeordnet ist und das zwischen der Außenwandung (31) des Stutzens (35) und dem ihn umgreifenden Teils (34) des Deckels (4) wenigstens eine vorzugsweise zwei Abdichtungen (45) vorgesehen sind.

11. Gehäuse nach Anspruch 10, dadurch gekennzeichnet, daß die Abdichtung (45) eine im Bereich des dem Gehäuseteiles (2) abgewandten Endes des Stutzens (25) umlaufend angeordnete Lippendichtung (45) ist.

12. Gehäuse nach einem der Ansprüche 1 bis 11, dadurch gekennzeichnet, daß der Deckel (4) vertikal verschiebbar und drehbar auf dem Stutzen (35) angeordnet ist.

13. Gehäuse nach einem der Ansprüche 1 bis 12, dadurch gekennzeichnet, daß die aneinander stoßenden Innenwandungen (22;28) von Deckel (4) und Stutzen (35) mittels eines lösbaren, mehrfach haftenden Klebers miteinander verbunden sind.

14. Gehäuse nach einem der Ansprüche 1, 2 und/oder 4 bis 13, dadurch gekennzeichnet, daß auf der Innenseite des Kopfendes (33) des Deckels (4) wenigstens zwei, bevorzugt jedoch drei, mit einem etwaig vorhandenen Handrad (7) einer Betätigungsvorrichtung (6) in Eingriff zu bringende und/oder stehende Stifte (44) angeordnet sind.

15. Gehäuse nach Anspruch 14, dadurch gekennzeichnet, daß die Stifte (44) wenigstens teilweise aus einem nicht wärmeleitenden Material bestehen und/oder auf einer nicht wärmeleitenden Grundplatte (43) angeordnet sind, daß die Grundplatte (43) auf der die Innenseite des Deckelbodens (60,29) bzw. des Kopfendes des Deckels (4) bildenden Isolierschicht (29) festgelegt ist.

16. Gehäuse nach einem der Ansprüche 1, 2 und/oder 4 bis 15 ,dadurch gekennzeichnet, daß auf der Innenseite des Kopfendes (60) des Deckels (4) eine mit der Betätigungsvorrichtung (6) unmittelbar ohne Zwischenschaltung eines Handrades (7) in Wirkungseingriff zu bringende Vorrichtung vorgesehen ist.

17. Gehäuse nach einem der Ansprüche 1, 2 und /oder 4 bis 15, dadurch gekennzeichnet, daß auf der dem Gehäuseteil (2) zugewandten Seite der Grundplatte (43) eine mit der Betätigungsvorrichtung (6) unmittelbar ohne Zwischenschaltung des Handrades (7) in Wirkungseingriff zu bringende Vorrichtung vorgesehen ist.

18. Gehäuse nach einen der Ansprüche 1, 2 und/oder 4 bis 17, dadurch gekennzeichnet, daß die Vorrichtung aus einem mit der Gewindespindel (50) der Betätigungsvorrichtung (6) in Eingriff zu bringenden Verbindungselement besteht.

19. Gehäuse nach Anspruch 16 oder 18, dadurch gekennzeichnet, daß der Deckelboden (60) bzw. das Kopfende des Deckels (4) auf seiner Innenseite ein Nase aufweist, die mit einem komplementär dazu ausgestalteten Teil des Verbindungselementes in Eingriff zu bringen ist, daß das diesem Teil gegenüberliegende Ende des Verbindungselementes komplementär und in Eingriff bringbar zu dem ihm zugewandten Ende der Gewindespindel (50) der Betätigungsvorrichtung (6) ausgebildet ist und daß das der Nase zugewandte und der Gewindespindel zugewandte Ende mittels eines nicht wärmeleitenden Zwischenstückes miteinander verbunden ist.

20. Gehäuse nach einem der Ansprüche 1 und /oder 3 bis 13, dadurch gekennzeichnet, daß die Einrichtung (4a) zur Bedienung der Betätigungsvorrichtung (6) als ein das Kopfende (60) des Domes (25) im Dichteschluß mit diesem es durchdringendes Betätigungsorgan (4a) ausgestaltet ist.

21. Gehäuse nach einem der Ansprüche 1 und/oder 3 bis 13 und/oder 20, dadurch gekennzeichnet, daß das Betätigungsorgan (4a) ein drehbar angeordnetes Betätigungsteil (66) und ein dieses drehbar führendes und lagerndes Führungselement (62) aufweist.

22. Gehäuse nach einem der Ansprüche 1, 3 bis 13 und/oder 20, 21, dadurch gekennzeichnet, daß das Führungselement (62) an der Dominnenseite festgelegt ist und das Kopfende des Domes (25) durchdringend ausgestaltet ist.

23. Gehäuse nach einem der Ansprüche 1, 3 bis 13 und /oder 20 bis 22, dadurch gekennzeichnet, daß das Betätigungsorgan (66) an seiner dem Gehäuseinneren zugewandten Seite Betätigungsstifte (68) aufweist.

24. Gehäuse nach einem der Ansrüche 1, 3 bis 13 und /oder 20 bis 23, dadurch gekennzeichnet, daß das Betätigungsorgan (66) an seiner dem Gehäuseinneren abgewandten Seite mit einer Haltekappe (71) koppelbar ausgestaltet ist.

25. Gehäuse nach einem der Ansprüche 1, 3 bis 13 und/oder 20 bis 24, dadurch gekennzeichnet, daß das Betätigungsorgan (66) an seiner dem Gehäuseinneren abgewandten Seite eine als Innensechskant ausgestaltete Vertiefung (69) aufweist.

26. Gehäuse nach einen der Ansprüche 1, 3 bis 13 und/oder 20 bis 25, dadurch gekennzeichnet, daß zwischen Betätigungsorgan (66) und Führungselement (62) Dichtungselemente angeordnet sind.

27. Gehäuse nach einem der Anprüche 1, 3 bis 13 und/oder 20 bis 28, dadurch gekennzeichnet, daß das Betätigungsorgan (66) eine mit der Betätigungsvorrichtung (6) unmittelbar ohn Zwischenschaltung eines Handrades (7) in Wirkungeingriff zu bringende Vorrichtung aufweist.

28. Gehäuse nach einem der Ansprüche 1,3 bis 13 und /oder 20 bis 29, dadurch gekennzeichnet, daß die Vorrichtung aus einem mit der Gewindespindel (50) der Betätigungsvorrichtung (6) in Eingriff zu bringenden Verbindungelement besteht.

29. Gehäuse nach Anspruch 29 oder 30, dadurch gekennzeichnet, daß das Betätigungsorgan (66) auf seiner dem inneren des Gehäuses zugewandten Seite eine Nase aufweist, die mit einem komplementär dazu ausgestalteten Teil des Verbindungselementes in Eingriff zu bringen ist, daß das diesem Teil gegenüberliegende Ende des Verbindungselementes komplementär und in Eingriff bringbar zu dem ihm zugewandtem Ende der Gewindespindel (50) der Betätigungsvorrichtung (6) ausgebildet ist und daß das der Nase zugewandte und der Gewindespindel (50) zugewandte Ende des Verbindungselementes mittels eines nicht wärmeleitenden Zwischenstückes miteinander verbunden ist.

30. Gehäuse nach einem der Ansprüche 1 bis 31, dadurch gekennzeichnet, daß sich die Isoliermuffen (20,21) beginnend an der jeweiligen Stirnseite (16,17) des Gehäuses (1) und in einem Abstand zum entsprechenden zur jeweiligen Rohrleitung (10;11) gehörenden Flansch (14,15) endend erstrecken.

31. Gehäuse nach einem der Ansprüche 1 bis 32, dadurch gekennzeichnet, daß jede der Isoliermuffen (20,21) zweiteilig ausgestaltet ist und jeweils eines der beiden Isoliermuffenteile jeweils einem Gehäuseteil (2 ,3) zugeordnet ist.

32. Gehäuse nach Anspruch 32 und/oder 33, dadurch gekennzeichnet, daß jedes der Isoliermuffenteile mit seiner der Rohrleitung (10, 11) abgewandten Seite fest mit der einen Teil der Gehäusewandung (26,27) bildenden Isolierschicht (22,23) verbunden ist.

33. Gehäuse nach Anspruch 34, dadurch gekennzeichnet, daß jedes der Isoliermuffenteile mit der jeweiligen Isolierschicht (22,23) durch einen Kleber verbunden ist.

34. Gehäuse nach Anspruch 35, dadurch gekennzeichnet, daß es sich bei dem Kleber um einen lösbaren, mehrfach haftenden Kleber handelt.

35. Gehäuse nach Anspruch 35, dadurch gekennzeichnet, daß es sich bei dem Kleber um einen nicht lösbaren kleber handelt.

36. Gehäuse nach einem der Ansprüche 1 bis 37, dadurch gekennzeichnet, daß zwischen der Isolierschicht (22,23) der beiden Gehäuseteile (2,3) auf der Gehäuseteilungsebene (24) wenigstens teilweise ein lösbarer, mehrfach haftender Kleber angeordnet ist.

37. Gehäuse nach einem der Ansprüche 1 bis 38, dadurch gekennzeichnet, daß zwischen den aneinander stoßenden Enden der zweiteilig ausgestalteten Isoliermuffen (20,21) ein Kleber vorgesehen ist.

38. Gehäuse nach Anspruch 39, dadurch gekennzeichnet, daß der Kleber ein lösbarer und mehrfach haftender Kleber ist.

39. Gehäuse nach einem der Ansprüche 1 bis 40, dadurch gekennzeichnet, daß wenigstens eine der gegeneinander weisenden Gehäuseteilwandungen (26,27) der beiden Gehäuseteile (2,3) mit wenigstens einem mit der gegenüberliegenden Gehäuseteilwandung (26,27) des anderen Gehäuseteiles (2, 3) in Eingriff gelangendem Dichtungselement (72) versehen ist.

40. Gehäuse nach Anspruch 41, dadurch gekennzeichnet, daß beide gegeneinander weisende Gehäuseteilwandungen (26,27) der beiden Gehäuseteile (2,3) ein mit dem gegenüberliegenden Dichtungselement (72) in Eingriff gelangendes Dichtungselement (72) aufweisen.

41. Gehäuse nach Anspruch 41 oder 42, dadurch gekennzeichnet, daß das Dichtungselement (72) ein mit der abzudichtenden Fläche in Eingriff zu bringendes eine konvexe Dichtungsfläche aufweisendes Dichtungselement (72) ist und wenigstens einen Teil der Wandung (30,31;36, 37) wenigstens teilweise umhüllend ausgestaltet ist.

42. Gehäuse nach Anspruch 43, dadurch gekennzeichnet, daß der wenigstens ein Teil der Wandung (30,31; 36,37) wenigstens teilweise umhüllende Teil (74) des Dichtungselementes (72) winkelförmig ausgestaltet ist.

43. Gehäuse nach einem der Ansprüche 41 bis 44, dadurch gekennzeichnet, daß die Dichtungselemente (72) mittels Zentrierstifte miteinander in einer vorbestimmten festgelegten Position festlegbar ausgestaltet sind.

44. Gehäuse nach einem der Ansprüche 41 bis 45, dadurch gekennzeichnet, daß die Isoliermuffen (20,21) über die jeweilige Stirnseite (16,17) des Gehäuses (1) nach außen hinausragend und in einem Abstand zum entsprechenden zur jeweiligen Rohrleitung (10,11) gehörenden Flansch (14,15) im Gehäuseinneren endend ausgestaltet sind und von zwei halbschalenförmig ausgestalteten Mäntel (76) auf ihrer der Rohrleitung (10,11) abgewandten Seite umgeben sind und diese in direktem Kontakt mit dem Dichtungselement (72) stehend angeordnet sind.

45. Gehäuse nach einem der Ansprüche 41 bis 46, dadurch gekennzeichnet, daß die halbschalenförmig ausgestalteten Mäntel (76) aus Blech sind.

46. Gehäuse nach einem der Ansprüche 1 bis 47, dadurch gekennzeichnet, daß mit den Gehäuseteilen (2,3)einstückig ausgestaltete und diese in iher Einbaulage zueinander zentrierende bzw. bestimmende formschlüssig ineinander greifende und sich über zumindest Teile des Umfangs der Gehäuseteile (2,3) erstreckende Zentrierungsmittel (41,42) vorgesehen sind.

47. Gehäuse nach einem der Ansprüche 1 bis 48, dadurch gekennzeichnet, daß die Zentrierungsmittel (41,42) als Nut - Federverbindung ausgestaltet sind.
